# EUROPEAN PATENT SPECIFICATION

(11) **EP 4 572 068 B1**
(45) Date of publication and mention of the grant of the patent: **14.10.2026**
(21) Application number: 23215556.4
(22) Date of filing: 11.12.2023
(51) Int. Cl.: H02J 3/36, H02J 3/001, H02J 3/0073

(54) **METHOD AND CONTROLLER FOR CONTROLLING A POWER TRANSMISSION NETWORK**
VERFAHREN UND STEUERGERÄT ZUR STEUERUNG EINES ENERGIEÜBERTRAGUNGSNETZWERKS
PROCÉDÉ ET DISPOSITIF DE COMMANDE POUR COMMANDER UN RÉSEAU DE TRANSMISSION D'ÉNERGIE

(43) Date of publication of application: 18.06.2025
(73) Proprietor: GE Vernova Technology GmbH, 5400 Baden (CH)
(72) Inventor: KUMAR, Amit, Stafford ST16 1WS (GB); JASIM, Omar, Stafford ST16 1WS (GB); FONTEYNE, Damien, Pierre, Gilbert, Stafford ST16 1WS (GB)
(74) Representative: Openshaw & Co.

(56) References cited:
- US-A1- 2014 092 650
- US-A1- 2020 395 741

## Description

### FIELD OF THE INVENTION

The present invention relates to a method and a controller for controlling a power transmission network, and more particularly for controlling a converter station in a power transmission network.

### BACKGROUND

In high voltage direct current (HVDC) power transmission networks, alternating current (AC) power is typically converted to direct current (DC) power for transmission via overhead lines, under-sea cables and/or underground cables, also known as a transmission medium. This conversion removes a need to compensate for the AC reactive/capacitive load effects imposed by the power transmission medium, i.e., the transmission line or cable, and reduces the cost per kilometre of the lines and/or cables. The conversion tends to be beneficial, for example when power is transmitted over a long distance. DC power can also be transmitted directly from offshore wind parks to onshore AC power transmission networks, for instance.

The conversion between DC power and AC power is utilised where it is necessary to interconnect DC and AC power, for example between an AC grid and a HVDC transmission line. In power transmission networks, power conversion means, also known as power converters (i.e., power converters in converter stations, power electronics-based resources, power inverters etc.) are required at each interface or interconnection between AC and DC power to implement the required conversion from AC to DC or from DC to AC.

A HVDC transmission network will thus typically include a transmission medium with a power converter connected on either side of the transmission medium. The power converters are typically connected to AC networks via switchgears. The power converter and its respective switchgear may be referred
to as a converter station. A typical HVDC transmission network will thus have two converter stations, one on either side of the transmission medium, interfacing the transmission medium to a respective AC network.

US2020/0395741A1 provides a prior art example of a device for preparing a high-voltage direct current transmission. The device includes a first busbar which is connectable to a plurality of first energy generation or consumer units and a second busbar which is connectable to a plurality of second energy generation or consumer units. A transformer system includes a first primary coil which is connectable to the first busbar, a second primary coil which is connectable to the second busbar, and a secondary coil system which is inductively coupled to the first primary coil and the second primary coil to transform power routed on the first and second busbars to increased AC voltage. A converter system is connected to the secondary coil system to convert the increased AC voltage into DC voltage for the high-voltage direct current transmission. A converter station and an energy providing system are also provided.

A fault may occur in one of the converter stations. A conventional method to manage the fault comprises isolating the fault by opening circuit breakers and/or disconnectors on both sides of the transmission medium. The transmission network or power system may then be restarted in a new configuration that accounts for the fault. The conventional approach tends to require considerable time to detect and isolate the fault, and restart the transmission network, during which time the transmission medium and the converter stations are out of service. This can be problematic for maintaining power stability in the transmission network or power system. The increased downtime also tends to reduce the cost-effectiveness of operating the transmission network.

### SUMMARY OF THE INVENTION

In light of these considerations and emerging grid requirements, it is desired to develop methods that provide improved fault management of a fault in a transmission network. The invention is defined by a method for controlling a converter station in a power transmission network with the technical features of independent claim 1, and by a corresponding controller as defined in claim 8. Advantageous embodiments are defined in the dependent claims.

According to a first aspect of the invention, independent claim 1 provides a method for controlling a converter station in a power transmission network, the converter station comprising a first branch, a second branch, and a power converter. The first branch comprises a first switch in series with a first transformer in series with a second switch. The second branch comprises a third switch in series with a second transformer in series with a fourth switch. The first branch and the second branch are in parallel, the first and third switches are connected to an AC network, and the second and fourth switches are connected to an AC side of the power converter. The method comprises initially controlling, by a controller, the power converter to transfer power between the AC network and the transmission network via the first branch and the second branch. Detecting, by the controller, a fault in the second branch. In response to detecting the fault in the second branch: issuing, by the controller, a first command to reduce an AC side voltage of the power converter; and issuing, by the controller, a second command to open the first switch, the third switch, and the fourth switch. In response to the fourth switch opening: issuing, by the controller, a third command to close the first switch; and issuing, by the controller, a fourth command to restore an AC side voltage of the power converter to an AC reference value.

In other words, issuing the third and fourth commands causes the power converter to transfer power between the AC network and the transmission network via the first branch (only) and not via the second branch.

In some embodiments, the power converter further comprises a DC side that is connected to a power transmission medium. The method may further comprise issuing, by the controller, a DC voltage command to change or adjust a DC side voltage of the power converter to a DC reference value. This may be performed after the converter output voltage is clamped, i.e. before the switches are opened.

In some embodiments, detecting the fault in the second branch comprises detecting a fault between the third switch and the fourth switch.

In some embodiments, the fault comprises any one of: a break in an insulation in the second transformer, and/or an insulation failure in a component in the second branch; and/or an abnormal current flow through the converter station; and/or an abnormal current flow through the second branch; and/or an abnormal voltage in the converter station; and/or an abnormal voltage in the second branch; and/or a current path in the second branch that allows a current to flow from the power transmission network to a ground or Earth.

In some embodiments, the first command includes instructions to reduce an AC side voltage of the power converter to a first reference value; wherein the first reference value is zero, such that issuing the first command to reduce the AC side voltage of the power converter causes the AC side voltage of the power converter to converge to zero.

In some embodiments, the first command includes instructions to reduce an AC side voltage of the power converter to a first reference value; wherein the first reference value is a current opening capability of the fourth switch.

In some embodiments, the converter station is an asymmetrical monopole, or a bipole, or a symmetrical monopole HVDC transmission scheme, and initially controlling the power converter comprises initially controlling, by the controller, the power converter for the asymmetrical monopole, or the bipole, or the symmetrical monopole HVDC transmission scheme.

In some embodiments, the method is for controlling a power transmission network; the method further comprising, in response to the first switch closing: issuing, by the controller, a fifth command to the power transmission network, and/or to a windfarm controller, to transfer or connect wind-turbine feeders to the first AC network.

According to a second aspect of the invention, claim 8 provides a controller for controlling a converter station in a power transmission network, the converter station comprising a first branch, a second branch, and a power converter; wherein the first branch comprises: a first switch in series with a first transformer in series with a second switch; wherein the second branch comprises: a third switch in series with a second transformer in series with a fourth switch; wherein the first branch and the second branch are in parallel, the first and third switches are connected to an AC network, and the second and fourth switches are connected to an AC side of the power converter. The controller is configured to initially control the power converter to transfer power between the AC network and the transmission network via the first branch and the second branch; detect a fault in the second branch; and in response to detecting the fault in the second branch: issue a first command to reduce an AC side voltage of the power converter; and issue a second command to open the first switch, the third switch, and the fourth switch. In response to the fourth switch opening, the controller is configured to: issue a third command to close the first switch; and issue a fourth command to restore an AC side voltage of the power converter to an AC reference value.

Generally, the controller tends to be configured to execute the methods described herein.

According to a third aspect, there is provided a converter station for a power transmission network, the converter station comprising: a first branch comprising: a first switch in series with a first transformer in series with a second switch; a second branch comprising: a third switch in series with a second transformer in series with a fourth switch; a power converter comprising an AC side and a DC side; and the controller of the second aspect configured to control the converter station. The first branch and the second branch are in parallel; the first and third switches are connected to an AC network; and the second and fourth switches are connected to the AC side of the power converter.

In some embodiments, the power converter is a Voltage Source Converter for providing power to a power transmission medium.

In some embodiments, the converter station is located onshore.

In some embodiments, the converter station is located offshore on a fixed platform.

In some embodiments, the converter station is located offshore on a floating platform.

In some embodiments, the first and third switches have higher current breaking capability compared to the second and fourth switches (216, 226).

In some embodiments, the first and third switches are circuit breakers. In some embodiments, the second and fourth switches are isolators or disconnectors.

According to a fourth aspect, there is provided an asymmetrical monopole or a symmetrical monopole HVDC transmission scheme comprising the converter station of the third aspect.

According to a fifth aspect, there is provided a power transmission network comprising an AC network; a HVDC power transmission medium; and the converter station of the third aspect. The converter station is connected between the AC network and the HVDC power transmission medium.

According to a sixth aspect, there is provided a computer program comprising instructions which when executed by a processor of a controller for controlling a power converter, cause the controller to perform the method of the first aspect.

According to a seventh aspect, there is provided a non-transitory computer-readable storage medium comprising the computer program of the sixth aspect.

It will be appreciated that particular features of different aspects of the invention share the technical effects and benefits of corresponding features of other aspects of the invention. More specifically, the controller, the converter station, the asymmetrical or symmetrical monopole HVDC transmission scheme, the power transmission network, the computer program, and the non-transitory computer-readable medium, share the technical effects and benefits of the method of the invention.

It will also be appreciated that the use of the terms "first" and "second", and the like, are merely intended to help distinguish between similar features and are not intended to indicate a relative importance of one feature over another, unless otherwise specified.

### BRIEF DESCRIPTION OF THE DRAWINGS

Figure 1 is a schematic illustration of an example of a power transmission network including a converter station;
Figure 2 shows an embodiment of a controller for controlling a converter station;
Figure 3 is a schematic illustration of an example of a converter station in a first configuration;
Figure 4 shows an embodiment of a method for controlling a converter station and/or a power transmission network;
Figure 5 is a schematic illustration of an example of a converter station in a fault condition;
Figure 6 is a schematic illustration of an example of a converter station in a second configuration; and
Figure 7 is a schematic illustration of an example of a converter station in a third configuration.

### DETAILED DESCRIPTION

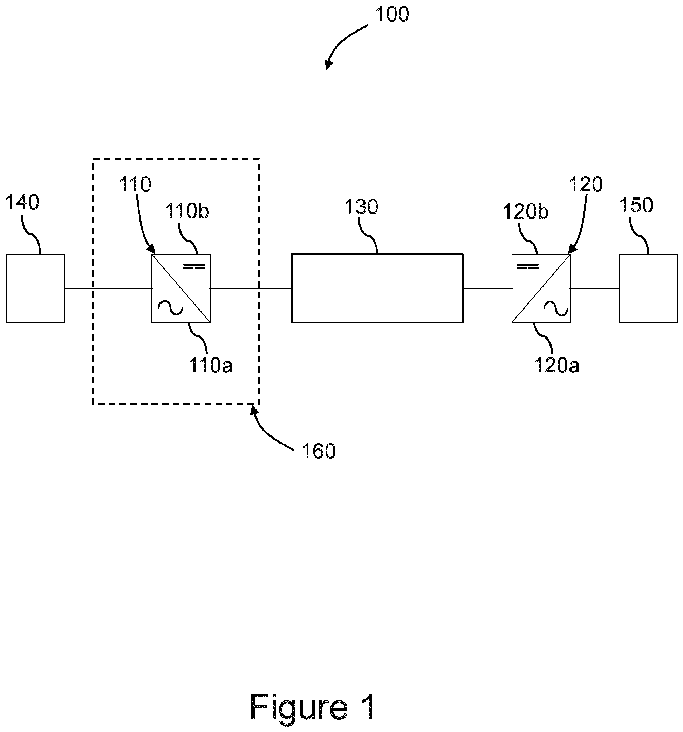

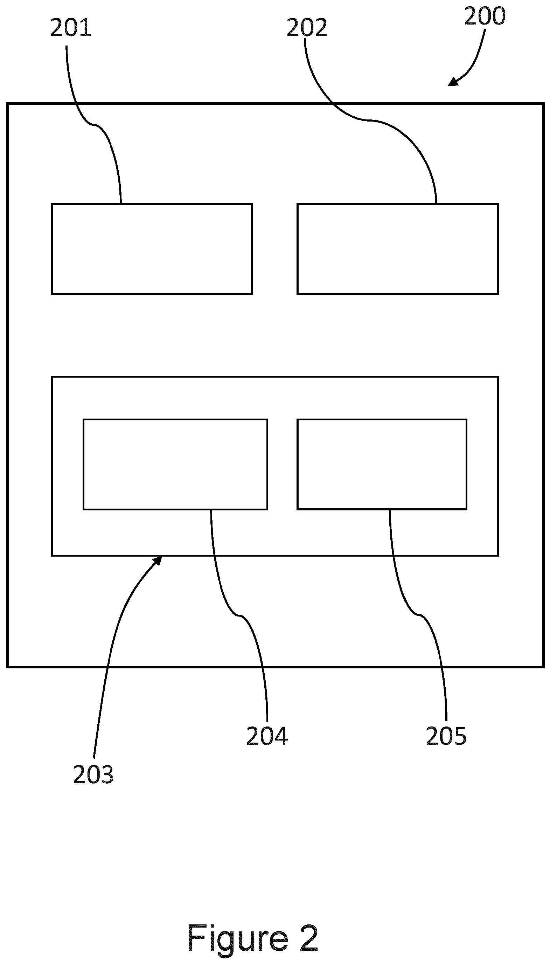

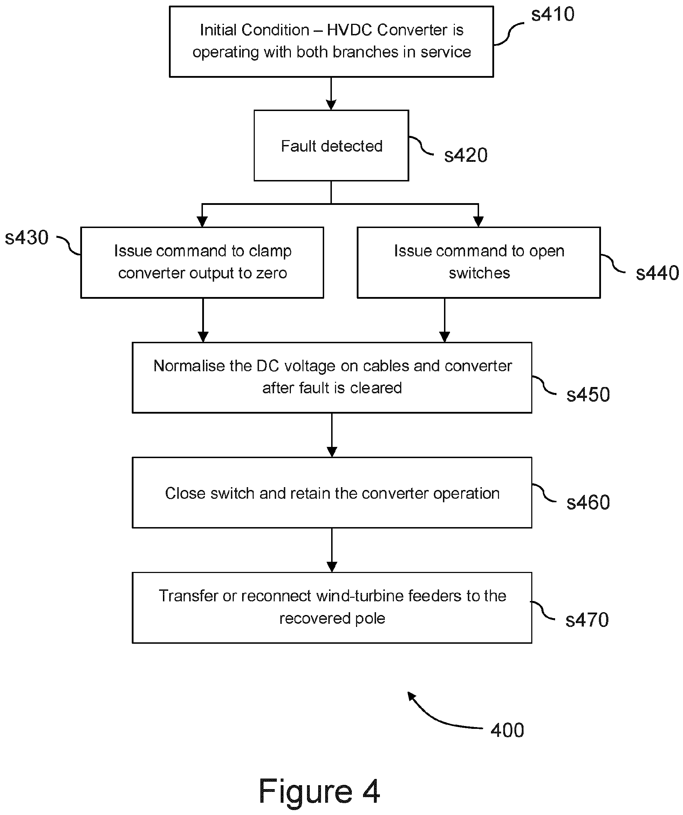

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, for instance; or networks controlled according to a method 400 of Figure 4.

The power transmission network 100 includes a first power converter 110 (also known as a converter station, power electronics-based resource, inverter, inverter station, etc.), a second power converter 120, a transmission medium 130, a first AC network 140, a second AC network 150, and a converter station 160.

The power converters 110, 120, can convert AC power to DC power, acting essentially as rectifiers; or DC power to AC power, acting essentially as inverters. The power converters 110, 120 may each comprise a single converter in the case of a monopole system, or two converters in the case of a bipole system. The power converters 110, 120 may represent a plurality of converter stations arranged as a multi-terminal power transmission system. Generically, the first power converter 110 comprises a first AC side 110a and a first DC side 110b. Generically, the second power converter 120 comprises a second AC side 120a and a second DC side 120b.

The first power converter 110 is connected to a first AC network 140. The first AC network 140 is connected to the first AC side 110a of the first power converter 110. The second power converter 120 is connected to a second AC network 150. The second AC network 150 is connected to the second AC side 120a of the second power converter 120.

The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance. In particular examples, the power converters 110, 120 may be geographically remote. For instance, the first power converter 110 may reside on an off-shore platform with a wind farm, and the second power converter 120 may reside on-shore.

The power transmission medium 130 connects the first power converter 110 and the second power converter 120. The power transmission medium 130 is connected between the first DC side 110b of the first power converter 110 and the second DC side 120b of the second power converter 120. The power transmission medium 130 may comprise electrical cables (or overhead lines) and other electrical components for connecting the first and second power converters 110, 120. For instance, the power transmission medium 130 may comprise a conductor providing a first electrical pole; and/or a conductor providing a second electrical pole. For bipole schemes, a neutral arrangement may also be provided interconnecting the first and second power converters 110, 120. The power transmission medium 130 provides the medium through which DC power is transferred between the power converters 110, 120.

The operation of the power transmission system 100 can be generically described as follows. The first AC network 140 generates AC power that is provided to the first power converter 110 at the first AC side 110a. The first power converter 110 converts the received AC power to DC power for transmission to the transmission medium 130. The DC power is transmitted from the first DC side 110b of the first power converter 110 to the transmission medium 130. The second DC side 120b of the second power converter 120 receives DC power from the transmission medium 130. The second power converter 120 converts the received DC power to AC power. The AC power is then provided from the second AC side 120a of the second power converter 120 to the second AC network 150 for consumption, for instance.

Additionally, in some circumstances, the first power converter 110 can also receive power from the transmission medium 130. The first power converter 110 can thus be configured to transfer real or reactive power in either direction, into or out of the first AC network 140. The second power converter 120 can also be configured to transfer real or reactive power in either direction, into or out of the second AC network 150.

It will be appreciated that various other electrical components may be located at any particular location or with any particular feature/component in the example 100. These may include power converter valves, switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics. Power electronic converters may comprise multi-level voltage sourced converters, for instance.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

The power transmission network 100 may further comprise a controller for controlling the operation of components of the power transmission network 100. For instance, a controller may be provided for executing the methods described herein. Such a controller may control the power converter 110, 120, for instance. Such a controller may be referred to as a controller means or control means. The controller may be the controller 200 of Figure 2.

Figure 2 illustrates an embodiment of a controller 200 as may be used in implementing the invention described herein.

The controller 200 comprises a memory 201 and at least one processor 202. The memory 201 comprises computer-readable instructions, which when executed by the at least one processor 202, cause the controller 200 to perform the method/s described herein.

The controller 200 is shown as comprising a transceiver arrangement 203 which may comprise a separate transmitter 204 and receiver 205. The transceiver arrangement 203 may be used to operatively communicate with other components or features of embodiments described herein either directly or via a further interface such as a network interface. The transceiver arrangement 203 may for instance send and receive control signals using transmitter 204 and receiver 205. The control signals may contain or define electrical control parameters such as reference currents or reference voltages.

The at least one processor 202 is capable of executing computer-readable instructions and/or performing logical operations. The at least one processor 202 may be a microcontroller, microprocessor, central processing unit (CPU), field programmable gate array (FPGA) or similar programmable controller. The controller may further comprise a user input device and/or output device. The processor 202 is communicatively coupled to the memory 201 and may in certain embodiments be coupled to the transceiver 203.

The memory 201 may be a computer readable storage medium. For instance, the memory 201 may include a non-volatile computer storage medium. For example, the memory 201 may include a hard disk drive, flash memory etc.

Whilst not shown, the controller 200 may additionally include a user input device interface and/or a user output device interface, which may allow for visual, audible or haptic inputs/outputs. Examples include interfaces to electronic displays, touchscreens, keyboards, mice, speakers and microphones.

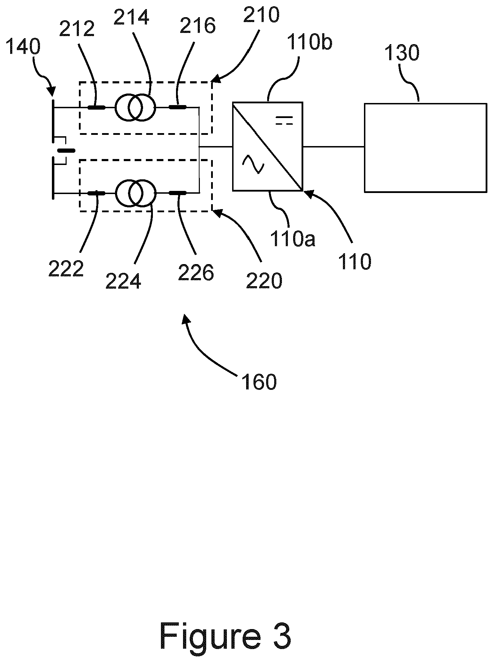

Figure 3 illustrates the converter station 160 in more detail. The converter station 160 comprises a first branch 210, a second branch 220, and the first power converter 110.

The first branch 210 comprises a first switch 212 in series with a first transformer 214 in series with a second switch 216. The second branch 220 comprises a third switch 222 in series with a second transformer 224 in series with a fourth switch 226. The first branch 210 and the second branch 220 are connected in parallel to the AC side 110a of the first power converter 110. The first and third switches 212, 222 are connected to the AC network 140. The second and fourth switches 216, 226 are connected to the AC side 110a of the first power converter 110. The DC side 110b of the first power converter 110 is connected to the power transmission medium 130.

The first and third switches 212, 222 may have current breaking capability, whereas the second and fourth switches 216, 226 may not have current breaking capability. Alternatively, the first and third switches 212, 222 may have higher current breaking capabilities compared to the second and fourth switches 216, 226. The first and third switches 212, 222 may be circuit breakers and the second and fourth switches 216, 226 may be circuit breakers having low current breaking capabilities or off-load switches such as isolators or disconnectors.

Although in this embodiment, the converter station 160 comprises the first power converter 110, it is to be understood that embodiments should not be limited in this way. For example, in other embodiments, a converter station may comprise the second power converter 120 instead of the first power converter 110.

The first transformer 214 and the second transformer 224 are conventional AC transformers. The first transformer 214 and the second transformer 224 have a primary side and a secondary side, and a turns ratio between the primary and secondary side. The turns ratio determines a ratio of voltage increase or decrease from the primary side to the second side, and/or vice versa.

A purpose of the first and second transformers is to step the voltage of the AC power from the AC network 140 to a suitable range to be received by the first power converter 110.

The first transformer 214 and the second transformer 224 may be variable transformers capable of having a variable turns ratio. The first and second transformers 214, 224 may be configured in any manner as required by a specific application.

The first transformer 214 and the second transformer 224 also provide electrical isolation from the AC network 140 to the power converter 110.

Figure 3 shows a normal operation, discussed in more detail later below, wherein the first switch 212 and the second switch 216 are in a closed position, i.e., provide a short circuit, such that power can be transferred through the first switch 212 and the second switch 216. The third switch 222 and the fourth switch 226 are also in a closed position, i.e., provide a short circuit, such that power can be transferred through the third switch 222 and the fourth switch 226.

Figure 4 shows an embodiment of a method 400 for controlling a converter station 160 and/or a power transmission network 100. At step s410, during a normal operation the first AC network 140 generates AC power. The AC power is transferred to the first AC side 110a of the first power converter 110 via the first branch 210 and the second branch 220. The first branch 210 and the second branch 220 are, from an operational perspective, identical, and therefore each branch may transfer a similar amount of power. However, in some examples, the first and second branches 210, 220 may be different, and as such the converter station 160 may be configured to transfer a different amount of power through the first branch 210 compared to the second branch 220. The specificity of the first and second branches 210, 220 may be application dependant.

During the normal operation, AC power is transferred from the AC network 140 to the first power converter 110, via the first and second branches 210, 220, with the first, second, third and fourth switches 212, 222, 216, 226 in the closed positions, and the transformers 214, 224 providing a suitable step-up or step-down of the AC voltage. The first power converter 110 converts the AC power to DC power that is transferred to the power transmission medium 130.

The first power converter 110 may also convert DC power from the power transmission medium 130 to AC power for the AC network 140. As such, the power converter 110 is initially controlled to transfer power between the AC network 140 and the transmission network 100 via the first branch 210 and the second branch 220.

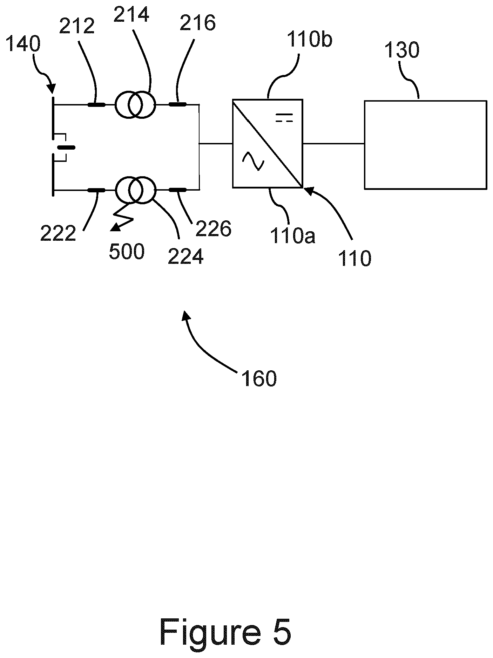

With reference to Figure 5, in this example, a fault 500 then occurs in the second branch 220, resulting in a fault condition. The fault 500 may be caused by, for example, a break in an insulation in the second transformer 224.

Generally, a fault may be understood to be anything that causes an abnormal current to flow through the converter station 160 or the second branch 220, or causes an abnormal voltage in the converter station 160 or the second branch 220. An abnormal current or voltage may be any current or voltage that is not expected during a normal operation of the converter station 160.

As a result of the fault 500, a current path is now present in the second branch 220 that allows a current to flow from the power transmission network 100 to, for example, a ground or Earth.

The fault 500 may cause a first fault current to travel from the first AC network 140 to the fault 500 via the first branch 210. The fault 500 may cause a second fault current to travel from the first AC network 140 to the fault 500 via the second branch 220. Additionally, a third fault current may travel from the transmission medium 130, via the first power converter 110, to the fault 500. There are thus three routes by which a fault current may be transferred out of the power transmission network 100 as a result of the fault 500.

A conventional method to manage the fault 500 tends to isolate the fault 500 by opening switches on both sides of the transmission medium 130. The power transmission network 100 may then be restarted in a new configuration that accounts for the fault 500. The conventional approach tends to require considerable time to detect the fault 500, and to isolate and restart the power transmission network 100, during which time the transmission medium 130 and the second power converter 120 are out of service. This can be problematic for maintaining voltage stability on the second AC network 150, considering reactive power requirements of the second AC network 150.

A benefit of controlling the converter station 160 according to the methods disclosed herein is that the second power converter 120 tends to continue transferring reactive power to the second AC network 150, even during the fault condition.

A further benefit is that the converter station 160 tends to be ready to resume transferring power from the first AC network 140 to the transmission medium 130 shortly after the fault has been detected and cleared or isolated by the switches. This is because the converter station 160 is reconfigured faster compared to conventional methods, because there is no need to shut down the transmission network 100 or to re-energise the transmission network 100 in a new configuration after the fault has been cleared or isolated. As such, the overall downtime of the power transmission network 100, as a result of the fault 500, tends to be less when compared with a conventional approach. These and other benefits tend to be realised when controlling the converter station 160 according to the methods disclosed herein, as will now be discussed.

With reference to Figure 4, once the fault 500 has occurred, at a step s420, the controller 200 detects the fault 500 in the second branch 220. The controller 200 can detect the fault by, for example, measuring voltages and currents through a transducer installed in the first branch 210 and/or second branch 220 of the converter station 160, or by any other voltage or current sensing or measuring means. The fault 500 may be anywhere between the third switch 222 and the fourth switch 226.

At step s430, in response to detecting the fault 500 in the second branch 220, the controller 200 issues a first command to reduce an AC side 110a voltage of the power converter 110. This causes a reduction in the third fault current. The first command may be issued to the power converter 110 or another controller.

The first command may include instructions to reduce the AC side 110a voltage to a first reference value. The first reference value may be zero, such that the first command to reduce the AC side 110a voltage of the power converter 110 causes the third fault current transferred from the AC side 110a of the converter 110 to converge to zero. Alternatively, the first reference value may be a finite non-zero value, such that the first command to reduce the AC side 110a voltage of the power converter 110 causes the third fault current from the AC side 110a of the converter 110 to converge to a value below, for example, a current opening capability of the fourth switch 226.

In other words, the first command causes the power converter 110 to clamp the AC side 110a voltage to zero or to below the threshold value.

At step s440, also in response to detecting the fault 500 in the second branch 220, the controller 200 issues a second command to open the first switch 212, the third switch 222, and the fourth switch 226. The second command causes the first switch 212, the third switch 222, and the fourth switch 226 to break their respective connections, such that they are in open circuit configuration which prevents current from conducting through the first switch 212, the third switch 222, and the fourth switch 226. The second command may be issued to the first switch 212, the third switch 222, and the fourth switch 226 directly, or to another controller.

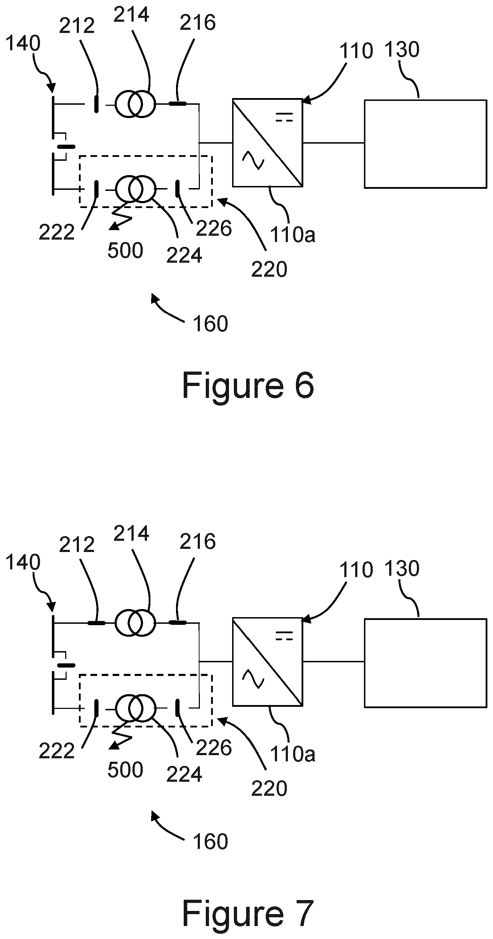

By opening the first switch 212, the third switch 222, and the fourth switch 226, any path or route by which current may be transferred out of the power transmission network 100 as a result of the fault 500 has been removed, disconnected, or broken, and as such the second transformer 224 (including the fault 500) is isolated from the power transmission network 100, as shown in Figure 6.

As a result of the first and second commands, the voltage of the transmission medium 130 may have become temporarily unstable or may have been temporarily interrupted. As such, the method 400 may further comprise, at step s450, the controller 200 issuing a DC voltage command to change or adjust the DC side 110b voltage of the power converter 110 to a DC reference value. The DC voltage command may be issued to the first power converter 110, and/or to the second power converter 120, and/or to another controller. The DC reference value may be a nominal operating DC voltage of the transmission medium 130. This may be, for example, 320kV or 525kV.

A purpose of the DC voltage command is to normalise the DC voltage on the transmission medium 130 after the fault 500 has been isolated. By normalising the DC voltage on the transmission medium 130, the power transmission network 100 may be restored to a normal operation, wherein real and reactive power may flow between first and/or second power converters 110 and 120.

At step s460, in response to the fourth switch 226 opening, the controller 200 then issues a third command to close the first switch 212 (i.e., return the first switch 212 to a conducting state), and also issues a fourth command to restore an AC side 110a voltage of the power converter 110 to an AC reference value. The AC reference value may be a value of, or a value close to, the AC side 110a voltage before the fault condition, for example the value of the AC side 110a voltage in step s410. As a result of issuing the third and fourth commands, the first branch 210 is able to transfer power between the first AC grid 140 to the first power converter 110, as shown in Figure 7. The third command may be issued to the first switch 212 or to another controller. The fourth command may be issued to the first power converter 110 or to another controller.

At step s470, once the first switch 212 has been closed, the controller 200 may issue a fifth command to transfer or connect wind-turbine feeders to the first AC network 140. As a result, the first AC network 140 can remain energised. The fifth command may be issued to the power transmission network 100, to a wind farm controller, or to another controller.

As a result of the above steps, the controller 200 has reconfigured the power converter 110 to transfer power between the AC network 140 and the power transmission medium 130 via the first branch 210 and not the second branch 220, such that the converter station 160 can transfer power from the first AC network 140 to the transmission medium 130 without the second branch 220.

In other words, the operation of the converter station 160 has been reestablished in a new transformer configuration, which takes into account the fault 500 in the second transformer 224.

In this manner, the methods disclosed herein tend to allow the converter station 160 to transfer power between the first AC network 140 to the transmission medium 130, shortly after the fault 500 has been detected and cleared, which reduces the downtime of the power transmission network 100. This is because the fault 500 tends to be isolated faster, compared to conventional methods, because the fault 500 can be managed by controlling the converter station 160 only on one side of the transmission medium 130. Additionally, the methods disclosed herein tend not to need to re-energise the transmission network 100 and/or first AC network 140 after the fault 500 has been isolated, which further helps reduce any downtime of the power transmission network 100.

Conventional power schemes, where only switches with current breaking capability are available for use in the AC side of the power converter, for example when one side of the transmission medium is onshore and the other side is off-shore, tend to, in a fault scenario, block and trip the power converters on both sides (i.e., the on-shore and off-shore side) of the transmission medium. After isolating the fault, the scheme tends to require manual reconfiguration to use only the single non-faulty transformer, and a start-up sequence is initiated from the onshore side to energise the transmission network 100. This conventional approach is not a preferred way to operate such a scheme, because normally the onshore converter also provides reactive power support to the connected onshore AC network, and especially for the islanded conditions, the onshore converter forms part of the network. Hence, it is desirable to have uninterrupted operation of the onshore converter in such circumstances.

A further benefit of the methods disclosed herein is that the fault 500 tends to be isolated and managed by controlling the converter station 160 only on one side of the transmission medium 130. As such, the converter station on the other side of the transmission medium 130, for example a converter station comprising the second power converter 120, can continue to operate uninterrupted and provide reactive power support to the second AC network 150.

The methods disclosed herein tend to be particularly advantageous when operating a transmission scheme or power transmission network 100 wherein the first power converter 110 is located offshore, and the second power converter 120 is located onshore. The first power converter 110 may be, for example, located on a fixed or floating platform. In such circumstances, the converter station 160 can benefit from only using switches that do not require current breaking capability, which tend to be more space efficient and thus more cost effective, which is a high priority on a fixed or floating platform.

The invention is further related to a method for controlling a power transmission scheme comprising a sending-end converter connected to at least two AC networks via two parallel transformers, each transformer connected to the AC network through a grid-side switch and to the converter through a converter-side switch, the method comprising: isolating the converter from the AC networks, upon detecting a fault in one of the transformer branches, by issuing a sixth command to open the two grid-side switches; clamping an AC voltage of the sending-end converter to zero; issuing a seventh command to open the converter-side switch associated with the faulty transformer branch for isolating the faulty transformer branch from the scheme; building up the AC voltage of the sending-end converter from zero to a nominal value; and issuing a eighth command to close the grid-side AC breaker associated with the healthy transformer to facilitate operation of the power transmission scheme with the healthy transformer in line.

The building up the AC voltage involves bringing the converter AC voltage directly to the nominal value or ramping up the AC voltage from zero to the nominal value at a pre-defined rate.

## Claims

1. A method (400) for controlling a converter station (160) in a power transmission network (100), the converter station (160) comprising a first branch (210), a second branch (220), and a power converter (110); wherein the first branch (210) comprises: a first switch (212) in series with a first transformer (214) in series with a second switch (216); wherein the second branch (220) comprises: a third switch (222) in series with a second transformer (224) in series with a fourth switch (226); wherein the first branch (210) and the second branch (220) are in parallel, the first and third switches (212, 222) are connected to a same AC network (140), and the second and fourth switches (216, 226) are connected to a same AC side (110a) of the power converter (110); the method **characterised by** comprising:
initially controlling, by a controller (200), the power converter (110) to transfer power between the AC network (140) and the transmission network (100) via the first branch (210) and the second branch (220);
detecting, by the controller (200), a fault (500) in the second branch (220);
in response to detecting the fault (500) in the second branch (220):
issuing, by the controller (200), a first command to reduce an AC side (110a) voltage of the power converter (110);
issuing, by the controller (200), a second command to open the first switch (212), the third switch (222), and the fourth switch (226);
in response to the fourth switch (226) opening:
issuing, by the controller (200), a third command to close the first switch (212); and
issuing, by the controller (200), a fourth command to restore an AC side (110a) voltage of the power converter (110) to an AC reference value.

2. The method of claim 1, wherein the power converter (110) further comprises a DC side (110b) that is connected to a power transmission medium (130); the method further comprising:
issuing, by the controller (200), a DC voltage command to change or adjust a DC side (110b) voltage of the power converter (110) to a DC reference value.

3. The method of claims 1 or 2, wherein detecting the fault (500) in the second branch (220) comprises detecting a fault (500) between the third switch (222) and the fourth switch (226).

4. The method of any preceding claim, wherein the fault comprises any one of:
a break in an insulation in the second transformer (224), and/or
an insulation failure in a component in the second branch (220); and/or
an abnormal current flow through the converter station (160); and/or
an abnormal current flow through the second branch (220); and/or
an abnormal voltage in the converter station (160); and/or
an abnormal voltage in the second branch (220); and/or
a current path in the second branch (220) that allows a current to flow from the power transmission network (100) to a ground or Earth.

5. The method of any preceding claim, wherein
the first command includes instructions to reduce an AC side (110a) voltage of the power converter (110) to a first reference value;
wherein the first reference value is zero, such that issuing the first command to reduce the AC side (110a) voltage of the power converter (110) causes the AC side (110a) voltage of the power converter (110) to converge to zero; or
wherein the first reference value is a current opening capability of the fourth switch (226).

6. The method of any preceding claim, wherein the converter station (160) is an asymmetrical monopole, or a bipole, or a symmetrical monopole HVDC transmission scheme, and initially controlling the power converter (110) comprises initially controlling, by the controller (200), the power converter (110) for the asymmetrical monopole, or the bipole, or the symmetrical monopole HVDC transmission scheme.

7. The method of any preceding claim, wherein the method is for controlling a power transmission network (100); the method (400) further comprising:
in response to the first switch (212) closing:
issuing, by the controller (200), a fifth command to the power transmission network (100), and/or to a windfarm controller, to transfer or connect wind-turbine feeders to the first AC network (140).

8. A controller (200) for controlling a converter station (160) in a power transmission network (100), the converter station (160) comprising a first branch (210), a second branch (220), and a power converter (110); wherein the first branch (210) comprises: a first switch (212) in series with a first transformer (214) in series with a second switch (216); wherein the second branch (220) comprises: a third switch (222) in series with a second transformer (224) in series with a fourth switch (226); wherein the first branch (210) and the second branch (220) are in parallel, the first and third switches (212, 222) are connected to a same AC network (140), and the second and fourth switches (216, 226) are connected to a same AC side (110a) of the power converter (110); the controller (200) configured to:
initially control the power converter (110) to transfer power between the AC network (140) and the transmission network (100) via the first branch (210) and the second branch (220);
detect a fault (500) in the second branch (220);
in response to detecting the fault (500) in the second branch (220):
issue a first command to reduce an AC side (110a) voltage of the power converter (110);
issue a second command to open the first switch (212), the third switch (222), and the fourth switch (226);
in response to the fourth switch (226) opening:
issue a third command to close the first switch (212); and
issue a fourth command to restore an AC side (110a) voltage of the power converter (110) to an AC reference value.

9. A converter station (160) for a power transmission network (100), the converter station (160) comprising:
a first branch (210) comprising: a first switch (212) in series with a first transformer (214) in series with a second switch (216);
a second branch (220) comprising: a third switch (222) in series with a second transformer (224) in series with a fourth switch (226);
a power converter (110) comprising an AC side (110a) and a DC side (110b); and
the controller of claim 8, configured to control the converter station (160);
wherein:
the first branch (210) and the second branch (220) are in parallel;
the first and third switches (212, 222) are connected to an AC network (140); and
the second and fourth switches (216, 226) are connected to the AC side (110a) of the power converter (110).

10. The converter station (160) of claim 9, wherein the power converter (110) is a Voltage Source Converter for providing power to a power transmission medium (130).

11. The converter station (160) of claim 9 or 10, wherein the converter station (160) is located onshore.

12. The converter station (160) of claim 9 or 10, wherein the converter station (160) is located offshore on a fixed or floating platform.

13. The converter station (160) of any one of claims 9 to 12, wherein:
the first and third switches (212, 222) have higher current breaking capability compared to the second and fourth switches (216, 226); and/or
the first and third switches (212, 222) are circuit breakers and the second and fourth switches (216, 226) are isolators or disconnectors.

14. An asymmetrical monopole or a symmetrical monopole HVDC transmission scheme comprising the converter station (160) of any one of claims 9-13.

15. A power transmission network (100) comprising:
an AC network (140, 150);
a HVDC power transmission medium (130); and
the converter station (160) of any of claims 9-13;
wherein the converter station (160) is connected between the AC network (140, 150) and the HVDC power transmission medium (130).

## Patentansprüche

1. Verfahren (400) zum Steuern einer Umrichterstation (160) in einem Stromübertragungsnetz (100), wobei die Umrichterstation (160) einen ersten Zweig (210), einen zweiten Zweig (220) und einen Stromumrichter (110) umfasst; wobei der erste Zweig (210) Folgendes umfasst: einen ersten Schalter (212) in Reihe mit einem ersten Transformator (214) in Reihe mit einem zweiten Schalter (216); wobei der zweite Zweig (220) Folgendes umfasst: einen dritten Schalter (222) in Reihe mit einem zweiten Transformator (224) in Reihe mit einem vierten Schalter (226); wobei der erste Zweig (210) und der zweite Zweig (220) parallel geschaltet sind, der erste und der dritte Schalter (212, 222) an dasselbe AC-Netz (140) angeschlossen sind, und der zweite und der vierte Schalter (216, 226) an dieselbe AC-Seite (110a) des Stromumrichters (110) angeschlossen sind; Verfahren **dadurch gekennzeichnet, dass** es Folgendes umfasst:
anfängliches Steuern, durch eine Steuereinheit (200), des Stromumrichters (110) zum Transferieren von Strom zwischen dem AC-Netz (140) und dem Übertragungsnetz (100) über den ersten Zweig (210) und den zweiten Zweig (220);
Erfassen, durch die Steuereinheit (200), eines Fehlers (500) in dem zweiten Zweig (220);
als Reaktion auf Erfassen des Fehlers (500) in dem zweiten Zweig (220):
Ausgeben, durch die Steuereinrichtung (200), eines ersten Befehls zum Reduzieren einer Spannung der AC-Seite (110a) des Stromumrichters (110);
Ausgeben, durch die Steuereinheit (200), eines zweiten Befehls zum Öffnen des ersten Schalters (212), des dritten Schalters (222) und des vierten Schalters (226);
als Reaktion auf Öffnen des vierten Schalters (226):
Ausgeben, durch die Steuereinheit (200), eines dritten Befehls zum Schließen des ersten Schalters (212); und
Ausgeben, durch die Steuereinheit (200), eines vierten Befehls zum Wiederherstellen einer Spannung der AC-Seite (110a) des Stromumrichters (110) auf einen AC-Referenzwert.

2. Verfahren nach Anspruch 1, wobei der Stromumrichter (110) weiter eine DC-Seite (110b) umfasst, die an ein Stromübertragungsmedium (130) angeschlossen ist; wobei das Verfahren weiter Folgendes umfasst:
Ausgeben, durch die Steuereinheit (200), eines DC-Spannungsbefehls zum Ändern oder Einstellen einer Spannung der DC-Seite (110b) des Stromumrichters (110) auf einen DC-Referenzwert.

3. Verfahren nach Anspruch 1 oder 2, wobei Erfassen des Fehlers (500) in dem zweiten Zweig (220) Erfassen eines Fehlers (500) zwischen dem dritten Schalter (222) und dem vierten Schalter (226) umfasst.

4. Verfahren nach einem vorstehenden Anspruch, wobei der Fehler eines umfasst von:
einer Unterbrechung einer Isolierung in dem zweiten Transformator (224), und/oder
einem Isolationsfehler in einem Bauteil in dem zweiten Zweig (220); und/oder
einem anormalen Stromfluss durch die Umrichterstation (160); und/oder
einem anormalen Stromfluss durch den zweiten Zweig (220); und/oder
einer anormalen Spannung in der Umrichterstation (160); und/oder
einer anormalen Spannung in dem zweiten Zweig (220); und/oder
einem Strompfad in dem zweiten Zweig (220), der es einem Strom erlaubt, von dem Stromübertragungsnetz (100) zu einer Masse oder Erde zu fließen.

5. Verfahren nach einem vorstehenden Anspruch, wobei
der erste Befehl Anweisungen beinhaltet, um die Spannung der AC-Seite (110a) des Stromumrichters (110) auf einen ersten Referenzwert zu reduzieren;
wobei der erste Referenzwert derart null ist, dass Ausgeben des ersten Befehls zum Reduzieren der Spannung der AC-Seite (110a) des Stromumrichters (110) die Spannung der AC-Seite (110a) des Stromumrichters (110) veranlasst, gegen null zu konvergieren; oder
wobei der erste Referenzwert eine Stromöffnungsfähigkeit des vierten Schalters (226) ist.

6. Verfahren nach einem vorstehenden Anspruch, wobei die Umrichterstation (160) ein asymmetrisches Monopol- oder ein Bipol- oder ein symmetrisches Monopol-HVDC-Übertragungssystem ist und anfängliches Steuern des Stromumrichters (110) anfängliches Steuern, durch die Steuereinheit (200), des Stromumrichters (110) für das asymmetrische Monopol- oder das Bipol- oder das symmetrische Monopol-HVDC-Übertragungssystem umfasst.

7. Verfahren nach einem vorstehenden Anspruch, wobei das Verfahren zum Steuern eines Stromübertragungsnetzes (100) dient; wobei das Verfahren (400) weiter Folgendes umfasst:
als Reaktion auf Schließen des ersten Schalters (212):
Ausgeben, durch die Steuereinheit (200), eines fünften Befehls an das Stromübertragungsnetz (100) und/oder an eine Windpark-Steuereinheit, um die Windkraftanlagenzuleitungen mit dem ersten AC-Netz (140) zu verbinden.

8. Steuereinheit (200) zum Steuern einer Umrichterstation (160) in einem Stromübertragungsnetz (100), wobei die Umrichterstation (160) einen ersten Zweig (210), einen zweiten Zweig (220) und einen Stromumrichter (110) umfasst; wobei der erste Zweig (210) Folgendes umfasst: einen ersten Schalter (212) in Reihe mit einem ersten Transformator (214) in Reihe mit einem zweiten Schalter (216); wobei der zweite Zweig (220) Folgendes umfasst: einen dritten Schalter (222) in Reihe mit einem zweiten Transformator (224) in Reihe mit einem vierten Schalter (226); wobei der erste Zweig (210) und der zweite Zweig (220) parallel geschaltet sind, der erste und der dritte Schalter (212, 222) an dasselbe AC-Netz (140) angeschlossen sind, und der zweite und der vierte Schalter (216, 226) an dieselbe AC-Seite (110a) des Stromumrichters (110) angeschlossen sind; wobei die Steuereinheit (200) konfiguriert ist zum:
anfänglichen Steuern des Stromumrichters (110) zum Transferieren von Strom zwischen dem AC-Netz (140) und dem Übertragungsnetz (100) über den ersten Zweig (210) und den zweiten Zweig (220);
Erfassen eines Fehlers (500) in dem zweiten Zweig (220);
als Reaktion auf Erfassen des Fehlers (500) in dem zweiten Zweig (220):
Ausgeben eines ersten Befehls zum Reduzieren einer Spannung der AC-Seite (110a) des Stromumrichters (110);
Ausgeben eines zweiten Befehls zum Öffnen des ersten Schalters (212), des dritten Schalters (222) und des vierten Schalters (226);
als Reaktion auf Öffnen des vierten Schalters (226):
Ausgeben eines dritten Befehls zum Schließen des ersten Schalters (212); und
Ausgeben eines vierten Befehls zum Wiederherstellen einer Spannung der AC-Seite (110a) des Stromumrichters (110) auf einen AC-Referenzwert.

9. Umrichterstation (160) für ein Stromübertragungsnetz (100), wobei die Umrichterstation (160) Folgendes umfasst:
einen ersten Zweig (210), der Folgendes umfasst: einen ersten Schalter (212) in Reihe mit einem ersten Transformator (214) in Reihe mit einem zweiten Schalter (216);
einen zweiten Zweig (220), der Folgendes umfasst: einen dritten Schalter (222) in Reihe mit einem zweiten Transformator (224) in Reihe mit einem vierten Schalter (226);
einen Stromumrichter (110), der eine AC-Seite (110a) und eine DC-Seite (110b) umfasst; und
die Steuereinheit nach Anspruch 8, die zum Steuern der Umrichterstation (160) konfiguriert ist;
wobei:
der erste Zweig (210) und der zweite Zweig (220) parallel geschaltet sind;
der erste und dritte Schalter (212, 222) an ein AC-Netz (140) angeschlossen sind; und
der zweite und vierte Schalter (216, 226) an die AC-Seite (110a) des Stromumrichters (110) angeschlossen sind.

10. Umrichterstation (160) nach Anspruch 9, wobei der Stromumrichter (110) ein Spannungsquellenumrichter zum Bereitstellen von Strom an ein Stromübertragungsmedium (130) ist.

11. Umrichterstation (160) nach Anspruch 9 oder 10, wobei sich die Umrichterstation (160) an Land befindet.

12. Umrichterstation (160) nach Anspruch 9 oder 10, wobei sich die Umrichterstation (160) ablandig auf einer festen oder schwimmenden Plattform befindet.

13. Umrichterstation (160) nach einem der Ansprüche 9 bis 12, wobei:
der erste und dritte Schalter (212, 222) höhere Stromabschaltleistung im Vergleich zum zweiten und vierten Schalter (216, 226) aufweisen; und/oder
der erste und dritte Schalter (212, 222) Leistungsschalter sind und der zweite und vierte Schalter (216, 226) Isolatoren oder Trenner sind.

14. Asymmetrisches Monopol- oder ein symmetrisches Monopol-HVDC-Übertragungssystem, das die Umrichterstation (160) nach einem der Ansprüche 9-13 umfasst.

15. Stromübertragungsnetz (100), das Folgendes umfasst:
ein AC-Netz (140, 150);
ein HVDC-Stromübertragungsmedium (130); und
die Umrichterstation (160) nach einem der Ansprüche 9-13;
wobei die Umrichterstation (160) zwischen dem AC-Netz (140, 150) und dem HVDC-Übertragungsmedium (130) angeschlossen ist.

## Revendications

1. Procédé (400) de commande d'une station de conversion (160) dans un réseau de transmission d'énergie (100), la station de conversion (160) comprenant une première branche (210), une seconde branche (220) et un convertisseur d'énergie (110) ; dans lequel la première branche (210) comprend : un premier commutateur (212) en série avec un premier transformateur (214) en série avec un deuxième commutateur (216) ; dans lequel la seconde branche (220) comprend : un troisième commutateur (222) en série avec un second transformateur (224) en série avec un quatrième commutateur (226) ; dans lequel la première branche (210) et la seconde branche (220) sont parallèles, les premier et troisième commutateurs (212, 222) sont connectés au même réseau alternatif (140), et les deuxième et quatrième commutateurs (216, 226) sont connectés au même côté CA (110a) du convertisseur d'énergie (110) ; le procédé étant **caractérisé en ce qu'**il comprend :
la commande initiale, par un dispositif de commande (200), du convertisseur d'énergie (110) pour transférer de l'énergie entre le réseau CA (140) et le réseau de transmission (100) via la première branche (210) et la seconde branche (220) ;
la détection, par le dispositif de commande (200), d'une défaillance (500) dans la seconde branche (220) ;
en réponse à la détection de la défaillance (500) dans la seconde branche (220) :
l'émission, par le dispositif de commande (200), d'une première instruction pour réduire une tension côté CA (110a) du convertisseur d'énergie (110) ;
l'émission, par le dispositif de commande (200), d'une deuxième instruction pour ouvrir le premier commutateur (212), le troisième commutateur (222) et le quatrième commutateur (226) ;
en réponse à l'ouverture du quatrième commutateur (226) :
l'émission, par le dispositif de commande (200), d'une troisième instruction pour fermer le premier commutateur (212) ; et
l'émission, par le dispositif de commande (200), d'une quatrième instruction pour restaurer une tension côté CA (110a) du convertisseur d'énergie (110) à une valeur de référence CA.

2. Procédé selon la revendication 1, dans lequel le convertisseur d'énergie (110) comprend en outre un côté CC (110b) connecté à un support de transmission d'énergie (130) ; le procédé comprenant en outre :
l'émission, par le dispositif de commande (200), d'une instruction de tension CC pour modifier ou ajuster une tension côté CC (110b) du convertisseur d'énergie (110) à une valeur de référence CC.

3. Procédé selon les revendications 1 ou 2, dans lequel la détection de la défaillance (500) dans la seconde branche (220) comprend la détection d'une défaillance (500) entre le troisième commutateur (222) et le quatrième commutateur (226).

4. Procédé selon une quelconque revendication précédente, dans lequel la défaillance comprend l'un des éléments suivants :
une rupture dans l'isolation du second transformateur (224), et/ou
une défaillance d'isolation dans un composant de la seconde branche (220) ; et/ou
un flux de courant anormal à travers la station de conversion (160) ; et/ou
un flux de courant anormal à travers la seconde branche (220) ; et/ou
une tension anormale dans la station de conversion (160) ; et/ou
une tension anormale dans la seconde branche (220) ; et/ou
un trajet de courant dans la seconde branche (220) qui permet à un courant de circuler du réseau de transmission d'énergie (100) vers une masse ou la Terre.

5. Procédé selon une quelconque revendication précédente, dans lequel
la première instruction inclut des instructions pour réduire une tension côté AC (110a) du convertisseur d'énergie (110) à une première valeur de référence ;
dans lequel la première valeur de référence est zéro, de sorte que l'émission de la première instruction visant à réduire la tension côté CA (110a) du convertisseur d'énergie (110) amène la tension côté CA (110a) du convertisseur d'énergie (110) à converger vers zéro ; ou
dans lequel la première valeur de référence est une capacité d'ouverture actuelle du quatrième commutateur (226).

6. Procédé selon une quelconque revendication précédente, dans lequel la station de conversion (160) est un schéma de transmission HVDC monopôle asymétrique, bipôle ou monopôle symétrique, et la commande initiale du convertisseur d'énergie (110) comprend la commande initiale, par le dispositif de commande (200), du convertisseur d'énergie (110) pour le schéma de transmission HVDC monopôle asymétrique, bipôle ou monopôle symétrique.

7. Procédé selon une quelconque revendication précédente, dans lequel le procédé est destiné à commander un réseau de transport d'énergie (100) ; le procédé (400) comprenant en outre :
en réponse à la fermeture du premier commutateur (212) :
l'émission, par le dispositif de commande (200), d'une cinquième instruction au réseau de transmission d'énergie (100), et/ou à un dispositif de commande de parc éolien, pour transférer ou connecter les alimentations d'éoliennes au premier réseau CA (140).

8. Dispositif de commande (200) pour commander une station de conversion (160) dans un réseau de transmission d'énergie (100), la station de conversion (160) comprenant une première branche (210), une seconde branche (220) et un convertisseur d'énergie (110) ; dans lequel la première branche (210) comprend : un premier commutateur (212) en série avec un premier transformateur (214) en série avec un deuxième commutateur (216) ; dans lequel la seconde branche (220) comprend : un troisième commutateur (222) en série avec un second transformateur (224) en série avec un quatrième commutateur (226) ; dans lequel la première branche (210) et la seconde branche (220) sont parallèles, les premier et troisième commutateurs (212, 222) sont connectés au même réseau alternatif (140), et les deuxième et quatrième commutateurs (216, 226) sont connectés au même côté CA (110a) du convertisseur d'énergie (110) ; le dispositif de commande (200) étant configuré pour :
commander initialement le convertisseur d'énergie (110) pour transférer de l'énergie entre le réseau CA (140) et le réseau de transmission (100) via la première branche (210) et la seconde branche (220) ;
détecter une défaillance (500) dans la seconde branche (220) ;
en réponse à la détection de la défaillance (500) dans la seconde branche (220) :
émettre une première instruction pour réduire une tension côté CA (110a) du convertisseur d'énergie (110) ;
émettre une deuxième instruction pour ouvrir le premier commutateur (212), le troisième commutateur (222) et le quatrième commutateur (226) ;
en réponse à l'ouverture du quatrième commutateur (226) :
émettre une troisième instruction pour fermer le premier commutateur (212) ; et
émettre une quatrième instruction pour restaurer une tension côté CA (110a) du convertisseur d'énergie (110) à une valeur de référence CA.

9. Station de conversion (160) pour un réseau de transmission d'énergie (100), la station de conversion (160) comprenant :
une première branche (210) comprenant : un premier commutateur (212) en série avec un premier transformateur (214) en série avec un deuxième commutateur (216) ;
une seconde branche (220) comprenant : un troisième commutateur (222) en série avec un second transformateur (224) en série avec un quatrième commutateur (226) ;
un convertisseur d'énergie (110) comprenant un côté CA (110a) et un côté CC (110b) ; et
le dispositif de commande selon la revendication 8, configuré pour commander la station de conversion (160) ;
dans laquelle :
la première branche (210) et la seconde branche (220) sont parallèles ;
les premier et troisième commutateurs (212, 222) sont connectés à un réseau CA (140) ; et
les deuxième et quatrième commutateurs (216, 226) sont connectés au côté CA (110a) du convertisseur d'énergie (110).

10. Station de conversion (160) selon la revendication 9, dans laquelle le convertisseur d'énergie (110) est un convertisseur de source de tension destiné à fournir de l'énergie à un support de transmission d'énergie (130).

11. Station de conversion (160) selon la revendication 9 ou 10, dans laquelle la station de conversion (160) est située au large.

12. Station de conversion (160) selon la revendication 9 ou 10, dans laquelle la station de conversion (160) est située en mer sur une plateforme fixe ou flottante.

13. Station de conversion (160) selon l'une quelconque des revendications 9 à 12, dans laquelle :
les premier et troisième commutateurs (212, 222) présentent une capacité de coupure de courant plus élevée que les deuxième et quatrième commutateurs (216, 226) ; et/ou
les premier et troisième commutateurs (212, 222) sont des disjoncteurs et les deuxième et quatrième commutateurs (216, 226) sont des isolateurs ou des sectionneurs.

14. Schéma de transmission HVDC monopôle asymétrique ou monopôle symétrique comprenant la station de conversion (160) selon l'une quelconque des revendications 9-13.

15. Réseau de transmission d'énergie (100) comprenant :
un réseau AC (140, 150) ;
un support de transmission d'énergie HVDC (130) ; et
la station de conversion (160) selon l'une quelconque des revendications 9-13 ;
dans lequel la station de conversion (160) est connectée entre le réseau CA (140, 150) et le support de transmission d'énergie HVDC (130).
